# EUROPÄISCHE PATENTSCHRIFT

(11) **EP 2 062 042 B1**
(45) Veröffentlichungstag und Bekanntmachung des Hinweises auf die Patenterteilung: **16.04.2014**
(21) Anmeldenummer: 07820187.8
(22) Anmeldetag: 13.09.2007
(51) Int. Cl.: G01N 30/20, G01N 1/00

(54) **ANORDNUNG ZUM DOSIEREN EINER GASFÖRMIGEN PROBE IN EINEN TRÄGERGASSTROM**
ARRANGEMENT FOR METERING A GASEOUS SAMPLE IN A CARRIER GAS STREAM
DISPOSITIF DE DOSAGE D'UN ÉCHANTILLON GAZEUX DANS UN COURANT DE GAZ PORTEUR

(30) Priorität: 13.09.2006 DE 102006042952
(43) Veröffentlichungstag der Anmeldung: 27.05.2009
(73) Patentinhaber: Siemens Aktiengesellschaft, 80333 München (DE)
(72) Erfinder: GELLERT, Udo, 76756 Bellheim (DE)
(86) Internationale Anmeldenummer: PCT/EP2007/059653
(87) Internationale Veröffentlichungsnummer: WO 2008/031869

(56) Entgegenhaltungen:
- EP-A- 0 003 617
- FR-A- 2 664 385
- US-A- 5 652 398
- ANONYMOUS (SIEMENS): "Prozess-Gas_Chromatograph MicroSAM" GERÄTEHANDBUCH C79000-G5300-C560-4.1, [Online] 7. August 2006 (2006-08-07), XP002463987 Gefunden im Internet: URL:http://cache.automation.siemens.com> [gefunden am 2007-01-09] in der Anmeldung erwähnt

## Beschreibung

Die Erfindung betrifft eine Anordnung zum Dosieren einer gasförmigen Probe in einen Trägergasstrom gemäß dem Oberbegriff des Patentanspruches.

Eine derartige Anordnung ist aus der EP 0 386 033 B1 oder dem Gerätehandbuch SIEMENS: "Prozess-Gas-Chromatograph MicroSAM", Ausgabe 4.01, C79000-G5300-C560-4.1, Seiten 30, 31, 40 und 41, im Internet:http://cache.automation.siemens.com/dnl/jQxMTYyMwAA 17969517 HB/MicroSAM%2DManual D V41.pdf (07.09.2006), bekannt.

In der Gaschromatographie hängt die Leistungsfähigkeit der Analyse von Gasproben in großem Maße von der Probenaufgabe in die chromatographische Trenneinrichtung (Trennsäulen oder Trennsäulenschaltungen) ab. Es werden kleine Dosiermengen in Form von kurzen und möglichst scharf begrenzten "Pfropfen" von Probengas in dem Trägergasstrom gefordert, der den Probenpfropf zu der Trenneinrichtung und durch diese hindurch fördert.

Die oben genannten bekannten Anordnungen weisen dazu einen Probengasweg und einen Trägergasweg auf, die beide an einer Trägergasquelle konstanten Drucks angeschlossen sind. Zwischen der Trägergasquelle und dem Probengasweg ist eine steuerbare Dosiereinrichtung angeordnet, die aus Ventilen und einer Dosierschleife besteht und zum Einschleusen eines breiten, unscharfen Probengaspfropfes in den Trägergasstrom durch den Probengasweg dient. Mittels einer Einrichtung zum Einstellen unterschiedlicher Drücke in dem Probengasweg und dem Trägergasweg lässt sich über einen Verbindungsgasweg zwischen beiden Gaswegen eine kleine Dosiermenge aus dem Probenpfropf in dem Probengasweg ausschneiden und in den Trägergasstrom durch den Trägergasweg überführen. Von dort gelangt der jetzt kurze und scharf begrenzte Probenpfropf zu der Trenneinrichtung.

Die Einstellung der unterschiedlichen Drücke in dem Probengasweg und dem Trägergasweg erfolgt beispielsweise mittels eines schaltbaren Ventils in dem Trägergasweg zwischen der Trägergasquelle und dem Abzweig des Verbindungsgasweges, wobei ein erster justierbarer Strömungswiderstand in dem Probengasweg vor dem Abzweig des Verbindungsgasweges und ein zweiter Strömungswiderstand dahinter angeordnet ist. Die Strömungswiderstände dienen dazu, die Druckverhältnisse in jeder der beiden Schaltstellungen des Ventils festzulegen und so z. B. zu verhindern, dass unbeabsichtigt Pröbengas aus dem Probenweg in den Trägergasweg gelangt.

Der Erfindung liegt die Aufgabe zugrunde, die Dosiergenauigkeit weiter zu erhöhen.

Gemäß der Erfindung wird die Aufgabe durch die in dem Patentanspruch angegebene Anordnung gelöst. Dementsprechend ist vorgesehen, dass der erste Strömungswiderstand zwischen der Trägergasquelle und der Dosiereinrichtung liegt und dass das Gasvolumen des Probengaswegs zwischen dem Abzweig des Verbindungsgasweges und dem zweiten Strömungswiderstand derart bemessen ist, dass der Probenpfropf erst nach dem Ausschneiden und Abzweigen der Dosiermenge den zweiten Strömungswiderstand erreicht.

Die Erfindung beruht auf der Erkenntnis, dass das Trägergas und die gasförmige Probe unterschiedliche Viskositäten aufweisen und die Viskosität der Probe darüber hinaus auch von deren Zusammensetzung abhängig ist, so dass sich in den Strömungswiderständen je nach Viskosität des durchströmenden Gases unterschiedliche Strömungsgeschwindigkeiten ergeben. Bei der erfindungsgemäßen Anordnung ist nun sichergestellt, dass während des Dosiervorganges, also während des Ausschneidens und Abzweigens der gewünschten Dosiermenge aus dem breiten Probenpfropf, kein Probengas durch einen der Strömungswiderstände fließt, so dass die Strömungsgeschwindigkeit und damit die dosierte Probenmenge von der Viskosität der Probe unabhängig ist.

Zur weiteren Erläuterung der Erfindung wird im Folgenden auf die Figuren der Zeichnung Bezug genommen, die ein Ausführungsbeispiel der erfindungsgemäßen Anordnung in vier verschiedenen Betriebsphasen zeigen.

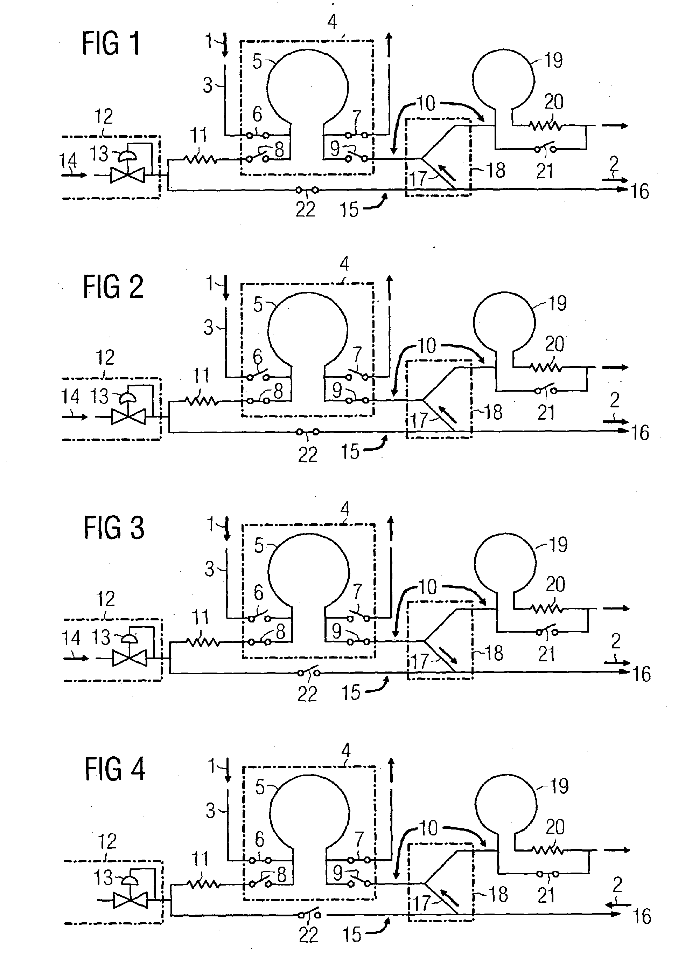

Die Figuren 1 bis 4 zeigen beispielhaft eine Anordnung zum Dosieren einer Probe (Stoffgemisch) 1 in einen Trägergasstrom 2 für eine nachfolgende gaschromatographische Analyse. Die Probe 1 wird dazu beispielsweise aus einem technischen Prozess entnommen und gegebenenfalls aufbereitet, z. B. verdampft, bevor sie in einen Bypass 3 mit einer darin liegenden Dosiereinrichtung 4 gelangt. Die Dosiereinrichtung 4 besteht aus einer Dosierschleife 5, die über steuerbare Ventile 6, 7 in den Bypass 3 schaltbar ist. Weitere steuerbare Ventile 8, 9 ermöglichen es, die Dosierschleife 5 in einen Probengasweg 10 zu schalten, der über einen ersten Strömungswiderstand 11 an einer Trägergasquelle 12 angeschlossen ist. Die Trägergasquelle 12 enthält einen Druckregler 13, der den Druck des Trägergases 14 konstant hält. An der Trägergasquelle 12 ist weiterhin ein Trägergasweg 15 angeschlossen, der zu einer hier nicht näher gezeigten gaschromatographischen Trenneinrichtung 16 führt, in der das Stoffgemisch der Probe 1 aufgetrennt und anschließend detektiert wird. Hinter der Dosiereinrichtung 4 ist der Probengasweg 10 über einen Verbindungsgasweg 17 mit dem.Trägergasweg 15 verbunden. Der so gebildete Strömungsteiler 18 kann in bekannter Weise (EP 0 386 033 B1 oder WO 00/17634, Fig. 2) ausgebildet sein. Im Verlauf des Probengasweges 10 sind hinter dem Abzweig des Verbindungsgasweges 17 zunächst ein Gasvolumen 19 vorgegebener Größe und anschließend ein zweiter Strömungswiderstand 20 angeordnet, bevor die Gase aus dem Probengasweg 10 ausgeleitet werden. Das Gasvolumen 19 und der zweite Strömungswiderstand 20 können über ein weiteres steuerbares Ventil 21 kurzgeschlossen werden. Schließlich ist im Verlauf des Trägergasweges 15 zwischen der Trägergasquelle 12 und dem Abzweig des Verbindungsgasweges 17 ein zusätzliches steuerbares Ventil 22 angeordnet. Die Ventile 6 bis 9, 21, 22 können in unterschiedlicher Weise, z. B. als Mikroventile, die Ventile 6 bis 9 insbesondere auch als Drehventil (WO 00/17634, Fig. 2) ausgebildet sein.

Figur 1 zeigt die erfindungsgemäße Anordnung in einer ersten Betriebsphase, in der die vereinfacht als Schalter dargestellten Ventile 6, 7, 22 geöffnet (d. h. Schalter geschlossen) und die Ventile 8, 9, 21 geschlossen (d. h. Schalter offen) sind. In dieser Betriebsphase wird die Dosierschleife 5 mit der Probe 1 gefüllt, während das Trägergas 14 über den Trägergasweg 15 in die Trenneinrichtung 16 fließt. Ein geringer Teil des Trägergases 14 gelangt dabei über den Verbindungsgasweg 17 in den Probengasweg 10 und wird dort über das Gasvolumen 19 und den zweiten Strömungswiderstand 20 entsorgt. Durch den Gasfluss in dem Verbindungsgasweg 17 wird verhindert, dass Gas aus dem Probengasweg 10 in den Trägergasweg 15 und die Trenneinrichtung 16 gelangt.

In der in Figur 2 gezeigten Betriebsphase sind die Ventile 8, 9, 22 geöffnet (d. h. Schalter geschlossen) und die Ventile 6, 7, 21 geschlossen (d. h. Schalter offen). Dabei wird die in der Dosierschleife 5 enthaltene Probenmenge mittels des Trägergases 14 als breiter Probengaspfropf durch den Probengasweg 10 geleitet. Wie auch in der in Figur 1 gezeigten Betriebsphase verhindert der Gasfluss in dem Verbindungsgasweg 17, dass Gas aus dem Probengasweg 10 in den Trägergasweg 15 und die Trenneinrichtung 16 gelangt.

Wenn der Probengaspfropf in den Bereich des Abzweigs des Verbindungsgasweges 17 gelangt, wird, wie in Figur 3 gezeigt, für eine kurze vorgegebene Zeit das Ventil 22 geschlossen (d. h. Schalter offen), so dass sich die Druckverhältnisse in dem Probengasweg 10 und dem Trägergasweg 15 ändern und der Gasfluss in dem Verbindungsgasweg 17 umkehrt. Dadurch wird aus dem breiten Probenpfropf in dem Probengasweg 10 eine kleine Dosiermenge ausgeschnitten und als scharf begrenzter, kurzer Probenpfropf in den Trägergasstrom durch den Trägergasweg 15 zu der Trenneinrichtung 16 überführt.

Dadurch, dass der erste Strömungswiderstand 11 zwischen der Trägergasquelle 12 und der Dosiereinrichtung 4 liegt und dass das Gasvolumen 19 des Probengaswegs 10 zwischen dem Abzweig des Verbindungsgasweges 17 und dem zweiten Strömungswiderstand 20 derart bemessen ist, dass der breite Probenpfropf erst nach dem Ausschneiden und Abzweigen der Dosiermenge den zweiten Strömungswiderstand 20 erreicht, ist sichergestellt, dass während des Dosiervorganges, also während des Ausschneidens und Abzweigens der gewünschten Dosiermenge aus dem breiten Probenpfropf, kein Probengas durch einen der Strömungswiderstände 11, 20 fließt, so dass die Strömungsgeschwindigkeit und damit die dosierte Probenmenge von der Viskosität der Probe 1 unabhängig ist.

In der in Figur 4 gezeigten Betriebsphase sind die Ventile 6, 7, 21 geöffnet (d. h. Schalter geschlossen) und die Ventile 8, 9, 22 geschlossen (d. h. Schalter offen). In diesem Betriebszustand wird die Trenneinrichtung 16 über den Verbindungsgasweg 17 und den Ausgang des Probengasweges 10 rückgespült.

## Patentansprüche

1. nordnung zum Dosieren einer gasförmigen Probe (1) in einen Trägergasstrom (2)
- mit einem Probengasweg (10) und einem Trägergasweg (15), die beide an einer Trägergasquelle (12) konstanten Drucks angeschlossen sind,
- mit einer zwischen der Trägergasquelle (12) und dem Probengasweg (10) angeordneten steuerbaren Dosiereinrichtung (4) zum Einschleusen eines Probengaspfropfes in den Trägergasstrom durch den Probengasweg (10),
- mit einem Verbindungsgasweg (17) zwischen dem Probengasweg (10) und dem Trägergasweg (15),
- mit Mitteln (22) zum Einstellen unterschiedlicher Drücke in dem Probengasweg (10) und dem Trägergasweg (15) zum Ausschneiden und Abzweigen einer Dosiermenge aus dem Probenpfropf über den Verbindungsgasweg (17) in den Trägergasstrom (2) durch den Trägergasweg (15) und
- mit einem ersten Strömungswiderstand (11) in dem Probengasweg (10) vor und einem zweiten Strömungswiderstand (20) hinter dem Abzweig des Verbindungsgasweges (17),
**dadurch gekennzeichnet,**
- **dass** der erste Strömungswiderstand (11) zwischen der Trägergasquelle (12) und der Dosiereinrichtung (4) liegt und
- **dass** das Gasvolumen (19) des Probengaswegs (10) zwischen dem Abzweig des Verbindungsgasweges (17) und dem zweiten Strömungswiderstand (20) derart bemessen ist, dass der Probenpfropf erst nach dem Ausschneiden und Abzweigen der Dosiermenge den zweiten Strömungswiderstand (20) erreicht.

## Claims

1. rrangement for metering a gaseous sample (1) in a carrier gas stream (2)
- with a sample gas path (10) and a carrier gas path (15), both paths being connected to a constant-pressure carrier gas source (12),
- with a controllable metering unit (4) arranged between the sample gas path (10) and a carrier gas path (15) used for feeding a sample gas slug into the carrier gas stream through the sample gas path (10),
- with a connection gas path (17) between the sample gas path (1) and the carrier gas path (15),
- with means (22) for setting different pressures in the sample gas path (10) and the carrier gas path (15) for extracting and diverting a metering amount from the sample slug via the connection path (17) into the carrier gas stream (2) through the carrier gas path (15) and
- with a first flow resistance (11) in the sample gas path (10) before and a second flow resistance (20) beyond the branch of the connection gas path (17),
**characterised in**
- **that** the first flow resistance (11) lies between the carrier gas source (12) and the metering unit (4) and
- **that** the gas volume (19) of the sample gas path (10) between the branch point of the connection gas path (17) and the other flow resistance (20) is dimensioned in such a way that the sample slug only reaches the second flow resistance (20) after the extraction and diversion of the metered amount.

## Revendications

1. gencement d'addition dosée d'un échantillon ( 1 ) gazeux à un courant ( 2 ) de gaz porteur
- comprenant un trajet ( 10 ) de gaz échantillon et un trajet ( 15 ) de gaz porteur, qui sont raccordés tous deux à une source ( 12 ) de gaz porteur de pression constante,
- comprenant un dispositif ( 4 ) d'addition dosée, qui peut être réglé, qui est disposé entre la source ( 12 ) de gaz porteur et le trajet ( 10 ) de gaz échantillon et qui est destiné à instiller une goutte de gaz échantillon dans le courant de gaz porteur par le trajet ( 10 ) de gaz échantillon,
- comprenant un trajet ( 17 ) de gaz de liaison entre le trajet ( 10 ) de gaz échantillon et le trajet ( 15 ) de gaz porteur,
- comprenant des moyens ( 22 ) de réglage de pressions différentes dans le trajet ( 10 ) de gaz échantillon et dans le trajet ( 15 ) de gaz porteur pour séparer et dériver une quantité de dosage de la goutte d'échantillon dans le courant ( 2 ) de gaz porteur par l'intermédiaire du trajet ( 17 ) de gaz de liaison en passant par le trajet ( 15 ) de gaz porteur et
- comprenant une première résistance ( 11 ) à l'écoulement dans le trajet ( 10 ) de gaz échantillon en amont et une deuxième résistance ( 20 ) à l'écoulement en aval de la dérivation du trajet ( 17 ) de gaz de liaison,
**caractérisé**
- **en ce que** la première résistance ( 11 ) à l'écoulement se trouve entre la source ( 12 ) de gaz porteur et le dispositif ( 4 ) d'addition dosée et
- **en ce que** le volume ( 19 ) de gaz du trajet ( 10 ) de gaz échantillon entre la dérivation du trajet ( 17 ) de gaz de liaison et la deuxième résistance ( 20 ) à l'écoulement a des dimensions telles que la goutte d'échantillon n'atteint la deuxième résistance ( 20 ) à l'écoulement qu'après la séparation et la dérivation de la quantité de dosage.
